(19) **Europäisches Patentamt**

**European Patent Office**

**Office européen des brevets**

(11) **EP 0 665 531 B1**

(12) **FASCICULE DE BREVET EUROPEEN**

(45) Date de publication et mention
de la délivrance du brevet:
**06.09.2000 Bulletin 2000/36**

(51) Int Cl.7: **G10L 15/20**

(21) Numéro de dépôt: **95430002.6**

(22) Date de dépôt: **13.01.1995**

(54) **Procédé et dispositif de reconnaissance de la parole**

Verfahren und Gerät zur Spracherkennung

Method and apparatus for speech recognition

(84) Etats contractants désignés:
**DE GB**

(30) Priorité: **28.01.1994 FR 9401235**

(43) Date de publication de la demande:
**02.08.1995 Bulletin 1995/31**

(73) Titulaire: **FRANCE TELECOM**
**75015 Paris (FR)**

(72) Inventeurs:
• **Bardaud, Philippe**
**F-78160 Marly le Roi (FR)**
• **Chollet, Gérard**
**F-78640 Saint Germain de la Grange (FR)**

(74) Mandataire: **Domange, Maxime et al**
**Cabinet Beau de Lomenie,**
**232, avenue du Prado**
**13295 Marseille Cedex 08 (FR)**

(56) Documents cités:
• **ICASSP 83, 1983, BOSTON pages 1160 - 1163
E.O. BELCHER ET AL. 'Helium speech
enhancement by frequency-domain processing'**
• **THE RADIO AND ELECTRONIC ENGINEER,
vol.52, no.5, Mai 1982 pages 211 - 223 M.A.JACK
ET AL. 'The Helium speech effect and electronic
techniques for enhancing intelligibility in a
Helium-Oxygen environment'**

## Description

La présente invention est relative à un procédé et un dispositif de traitement d'un signal de parole.

Le domaine technique de l'invention est celui des procédés et dispositifs de traitement de signaux .

L'invention est plus particulièrement relative à un procédé et un dispositif de traitement de signaux de parole afin de faciliter la reconnaissance de signaux de parole perturbée ou déformée, notamment les paroles prononcées par un plongeur sous marin.

On sait que la parole des plongeurs est déformée et rendue difficilement intelligible (c'est-à-dire compréhensible par un être humain notamment) pour différentes raisons; en effet, la composition du mélange gazeux respiré par un plongeur, qui diffère notablement de la composition gazeuse de l'atmosphère terrestre normale (ces mélanges sont généralement constitués par de l'azote, de l'oxygène, de l'hélium, de l'hydrogène...), ainsi que la pression du mélange gazeux et d'autres paramètres, modifient et conduisent à des déformations des paroles prononcées par le locuteur (le plongeur), et par conséquent modifient l'allure et les caractéristiques des signaux de parole correspondants qui peuvent être délivrés par un microphone devant lequel parle le plongeur.

Des travaux ont été réalisés pour comprendre les mécanismes de ces déformations et pour tenter d'améliorer l'intelligibilité de la parole des plongeurs.

Parmi ces modifications, on a constaté des variations du ton ("pitch") et des formants.

Le document "the helium speech effect and electronic techniques for enhancing intelligibility in a helium-oxygen environment", JACK et al, The Radio and Electronic Engineer, vol 52, no 5, pages 211-223, mai 1982, décrit des techniques utilisées pour améliorer l'intelligibilité de la parole des plongeurs.

Les systemes connus à ce jour modifient, en "temps réel", les signaux de parole déformée délivrés par un microphone devant lequel parle le plongeur, à l'aide de dispositifs électroniques plus ou moins sophistiqués dont le fonctionnement est basé sur une modélisation (obligatoirement approximative) des mécanismes de déformation de la parole, afin de permettre la compréhension par un interlocuteur, généralement situé à terre ou en surface de l'eau, des paroles prononcées par le plongeur.

Ces dispositifs de correction de signaux sont généralement situés à terre ou en surface (par exemple sur un navire ou une plateforme), ou bien comportent une partie disposée à proximité du plongeur, comme par exemple dans le brevet US 4,342,104 (JACK).

Le problème posé consiste à procurer un procédé et un dispositif de traitement de signaux de parole, destinés à être incorporés dans un système de reconnaissance de paroles déformées, qui facilitent ou améliorent l'intelligibilité des signaux de parole.

La solution au problème posé consiste à procurer un dispositif selon la revendication 5. Le dispositif comporte des moyens électroniques, de préférence essentiellement numériques, pour augmenter, de préférence de manière sensiblement linéaire, la fréquence (f1,f2) de formants dudit signal de parole dans un rapport voisin de 2 à 3, c'est à dire pour multíplier, par un nombre voisin de 2 à 3, lesdites fréquences de formants (c'est à dire des fréquences autour desquelles une partie significative de l'énergie dudit signal de parole est concentrée, à cause de résonnances du conduit vocal humain à ces fréquences).

Avantageusement un dispositif selon l'invention comporte:

- des moyens d'extraction pour extraire dudit signal (P) de parole (c'est à dire calculer à partir dudit signal de parole) un signal d'excitation (ou signal résiduel) représentatif des sources sonores et vibratoires de paroles (cordes vocales, écoulements du gaz respiré,...),
- des moyens de détermination d'enveloppe pour calculer, à partir dudit signal de parole, des coefficients caractéristiques de la forme de l'enveloppe spectrale dudit signal de parole (ou caractéristiques desdits formants),
- des moyens d'interpolation pour élaborer, à partir dudit signal d'excitation,un signal d'excitation interpolé ayant un chronogramme de forme (d'allure) identique au chronogramme dudit signal d'excitation et ayant une densité (temporelle) de points ( ou échantillons ou valeurs) double ou triple de la densité de points dudit signal d'excitation,
- des moyens de synthèse d'un signal (D) de parole déformée simulée (ou parole hyperbare simulée) à partir dudit signal d'excitation interpolé et desdits coefficients caractéristiques.

Avantageusement, un dispositif selon l'invention comporte un module de codage par prédiction linéaire qui intègre (ou constitue) lesdits moyens d'extraction et lesdits moyens de détermination d'enveloppe.

Avantageusement un dispositif selon l'invention comporte des moyens de prétraitement dudit signal de parole qui comportent :

- des moyens de pré-accentuation pour rehausser légèrement les composantes de fréquence élevée dudit signal de parole,
- des moyens de fenêtrage pour pondérer un segment de signal c'est-à-dire une fenêtre ou une suite temporelle d'échantillons dudit signal de parole selon une courbe de forme prédéterminée, par exemple une fenêtre dite de Hamming.

L'invention consiste donc à procurer un dispositif de reconnaissance de signaux (A) de parole déformée (c'est-à-dire de parole prononcées dans une atmosphère dont la composition gazeuse et/ou la pression est différente de celle de l'atmosphère terrestre normale) délivrés par un microphone, qui comporte un module de comparaison desdits signaux (A) déformés avec des signaux (D) déformés simulés qui sont obtenus (élaborés) à partir de signaux (P) de parole non déformée préalablement numérisés et enregistrés dans une mémoire, et dans lequel les fréquences de formants desdits signaux déformés simulés sont voisines du double ou du triple des fréquences de formants desdits signaux non déformés numérisés.

Avantageusement, un dispositif de reconnaissance comporte :

- un dispositif d'élaboration et d'enregistrement dans une mémoire (par exemple de manière à constituer une base de données ou un fichier de données spécifique d'un locuteur déterminé) de données (s) représentatives de signaux déformés simulés (D) obtenus à partir de signaux de parole non déformés (P), qui comporte :
- des moyens de conversion pour numériser (ou échantilloner) un signal analogique de parole en une suite temporelle d'échantillons ou valeurs numériques x(n) de parole non déformée,
- des moyens numériques (ou filtre numérique) de pré-accentuation pour rehausser légèrement les composantes de fréquence élevée du signal de parole échantillonné x(n),
- des moyens de fenêtrage pour pondérer une fenêtre (ou suite temporelle d'échantillons dudit signal de parole non déformée) selon une courbe de forme prédéterminée,
- des moyens d'extraction pour extraire desdites données x(n) de parole représentatives dudit signal de parole non déformée, des données numériques e(n) d'excitation représentatives d'un signal d'excitation ,
- des moyens de détermination d'enveloppe pour calculer, à partir desdites données de parole non déformée, des coefficients a(i) caractéristiques de la forme de l'enveloppe spectrale dudit signal de parole non déformée (ou caractéristiques desdits formants),
- des moyens d'interpolation linéaire pour élaborer, à partir desdites données d'excitation e(n), des données d'excitation interpolées ei(n) ayant un chronogramme de forme (d'allure) identique au chronogramme desdites données d'excitation et ayant une densité (temporelle) de points ( ou échantillons ou valeurs) double ou triple de la densité de points desdites données d'excitation,
- des moyens de synthèse (par calcul) de données s(n) représentatives d'un signal de parole déformée simulée à partir desdites données d'excitation interpolées ei(n) et desdits coefficients caractéristiques a(i),
- des moyens de conversion desdites données s(n) de parole déformée simulée en signaux analogiques (D) de parole déformée simulée,
- un dispositif de comparaison de signaux (A) de parole déformés avec lesdits signaux (D) déformés simulés.

L'invention consiste également à mettre en oeuvre un procédé de reconnaissance de signaux (A) de parole déformée délivrés par un microphone, dans lequel:

- on numérise et on enregistre dans une mémoire des signaux (P) de parole non déformée, prononcée par un locuteur déterminé au moins, dans des conditions (mélange gazeux respiré et pression notamment) similaires ou identiques à celles de l'atmosphère terrestre moyenne ou normale,
- on élabore des signaux (D) déformés simulés à partir desdits signaux (P) de parole non déformée, les fréquences de formants desdits signaux déformés simulés étant voisines du double ou du triple des fréquences de formants desdits signaux non déformés (qui ont été numérisés),
- on compare, à l'aide d'un module de comparaison, par exemple par des calculs de distances, lesdits signaux (A) déformés avec lesdits signaux (D) déformés simulés.

Avantageusement, dans un procédé selon l'invention:

- ledit signal (P) est échantillonné et numérisé à une première fréquence (fe) par exemple voisine de 10 kilo Hertz (10000 Hz), les valeurs ou données successives (y(1),...,y(n)) obtenues étant enregistrées dans une mémoire,
- ledit signal (D) est obtenu par conversion numérique-analogique, et échantillonage à une deuxième fréquence (fs) voisine du double ou du triple de ladite première fréquence, de données (s(1),...,s(3n)) représentatives dudit signal (D) déformé simulé,
- lesdites données représentatives dudit signal (D) sont obtenues par synthèse ou superposition de données (ei(1),...,ei(3n)) représentatives d'un signal d'excitation interpolé (ei) et d'une enveloppe spectrale determinée par des coefficients (a(1),..., a(k)),
- lesdites données représentatives dudit signal (ei) d'excitation interpolé sont obtenues par interpolation de données (e(1),...,e(n)) représentatives d'un signal d'excitation non interpolé (e),
- lesdites données représentatives dudit signal (e) d'excitation non interpolé ainsi que lesdits coefficients caractéristiques de l'enveloppe spectrale sont calculés à partir (c'est-à-dire extraits) dudit signal (P) de parole non déformée, par une méthode de codage par prédiction linéaire (LPC : "linear predictive coding").

Alternativement, lesdits signaux déformés simulés sont élaborés en utilisant une méthode de régréssion linéaire multiple (LMR : "linear multiple regression") appliquée aux vecteurs de cepstre desdits signaux numérisés de parole non déformée.

Un avantage obtenu par l'invention est que l'on peut facilement (à partir de signaux de parole "propres" c'est à dire non déformés) constituer des fichiers ou une base de données de signaux simulés qui sont représentatifs de paroles déformées simulées.

On peut ainsi, à moindre coût, constituer pour chaque plongeur ou locuteur, un fichier personnel de (signaux de) paroles (ou mots) prononcées dans des conditions normales et un fichier personnalisé correspondant contenant des signaux représentatifs des mêmes mots dans des conditions simulées de déformation (c'est à dire des signaux de paroles déformées simulées).

On peut alors enregistrer ces signaux de paroles déformées simulées (par exemple quelques dizaines ou centaines de mots) sur un support d'enregistrement qui peut être utilisé par un système "embarqué", c'est à dire placé ou immergé à proximité du plongeur lorsque celui-ci est en plongée; ceci peut permettre au plongeur de contrôler lui même (en temps "réel" ou légèrement différé) si les paroles déformées qu'il prononce sont reconnues par le système de reconnaissance; ceci représente un progrès important par rapport aux systèmes connus de reconnaissance vocale dont les résultats (reconnaissance ou non d'un mot prononcé de manière déformée) ne peuvent être connus du locuteur.

Ceci présente notamment des avantages en terme de sécurité pour le plongeur lui même lorsqu'il désire communiquer avec un interlocuteur situé en surface (ou en plongée également), et peut d'autre part permettre au plongeur de commander des outils sous marins à l'aide du système immergé de reconnaissance vocale, ce qui est quasiment impossible si le système de reconnaissance est placé en surface ou bien à terre.

Les performances de systèmes selon l'invention sont notablement améliorées par rapport aux systèmes connus, grâce notamment au fait que l'on compare de préférence des paroles déformées avec des paroles déformées simulées élaborées à partir de paroles non déformées prononcées par le même locuteur.

Un autre avantage obtenu est que l'on peut élaborer à moindre coût des fichiers (ou bases de données) de paroles déformées simulées qui peuvent être utilisées pour tester les performances d'autres systèmes de reconnaissance.

Les caractéristiques et avantages de l'invention seront mieux compris au travers de la description suivante, qui se réfère aux dessins annexés qui illustrent, sans aucun caractère limitatif, des modes de réalisation de l'invention.

La figure 1 illustre schématiquement les constituants essentiels d'un dispositif selon l'invention et son utilisation conformément à un procédé selon l'invention.

La figure 2 illustre schématiquement un chronogramme d'un signal de parole P non déformée, et la figure 3 illustre shématiquement l'allure du spectre de ce signal.

La figure 4 illustre schématiquement un chronogramme d'un signal d'excitation E et d'un signal d'excitation interpolé Ei obtenu à partir du signal d'excitation E.

La figure 5 illustre schématiquement une courbe d'enveloppe spectrale utilisée pour la synthèse d'un signal simulé de parole déformée.

La figure 6 illustre schématiquement le mode de fonctionnement d'un simulateur utilisant une méthode de codage par prédiction linéaire.

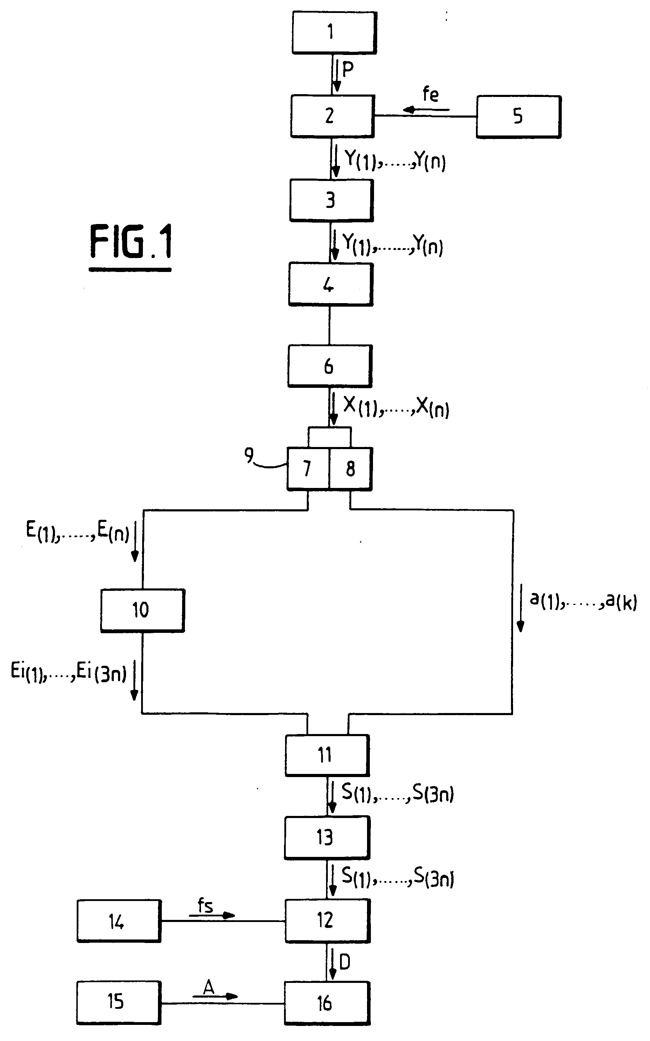

Par réference à la figure 1 notamment, un dispositif de reconnaissance selon l'invention comporte :

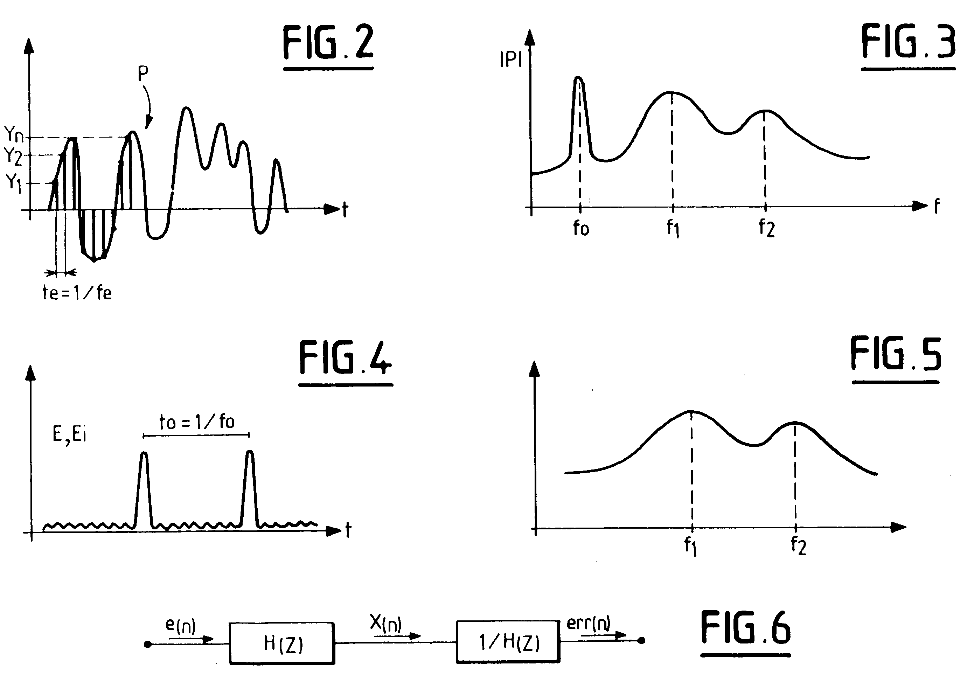

- un microphone 1 sensible aux paroles prononcées par un locuteur, lequel microphone délivre des signaux de parole P non déformée à un convertisseur analogique digital 2 qui numérise le signal P à une fréquence d'échantillonnage fe contrôlée par une horloge 5; les (n) données numériques (ou échantillons) obtenues (fig 1 et 2) y(1),...,y(n) sont enregistrées dans une mémoire 3 qui peut être structurée en base de données;
- un dispositif de simulation de déformation du signal de parole P qui comporte:
- un filtre numérique 4 de pré-accentuation, auquel sont délivrées les données y(1),...,y(n), qui sont ensuite dirigées vers un pondérateur 6 ou module de fenêtrage qui délivre n données x(1),...,x(n) pré-traitées, qui sont représentatives dudit signal P prétraité;
- un module 9 de codage par prédiction linéaire, qui comporte un module 7 de calcul ou d'extraction de n données e(1),...e(n) représentatives d'un signal d'excitation E (fig 4), et qui comporte un module 8 de calcul de k coefficients a(1),...a(k) représentatifs de l'enveloppe spectrale (fig 5) du signal P (à l'exception du "pic" centré sur la fréquence f0 -fig 3- correspondant au "pitch");
- un module 10 d'interpolation qui double ou triple la densité de points (ou valeurs) du signal E, pour délivrer un signal d'excitation Ei interpolé identique au signal E (fig 4);
- un module 11 de synthèse qui calcule des données s(1),...s(3n) représentatives d'un signal S déformé simulé, par superposition du signal d'excitation interpolé et de l'enveloppe spectrale définie par les k coefficients a(1,..,k);
- une mémoire de sortie 13 permet l'enregistrement sous forme numérique du signal déformé simulé S;
- ces données s(1,...,3n) représentatives du signal déformé simulé S peuvent alors être présentées à l'entrée d'un convertisseur numérique analogique 12 piloté par une horloge 14 délivrant un signal d'échantillonnage à une fréquence d'échantillonnage de sortie fs double ou triple de la fréquence fe d'échantillonnage d'entrée du convertisseur 2;

- le signal D analogique de parole déformée simulée ainsi obtenu est comparé à un signal A de parole effectivement déformée délivré par un microphone 15.

Le simulateur de parole déformée peut éventuellement utiliser des moyens de calcul par LMR au lieu du calcul par LPC.

L'utilisation de la méthode de calcul par LPC permet de distinguer, dans le signal de parole d'entrée, la contribution des sources sonores (cordes vocales définissant le ton, notamment) d'excitation dans le signal P de parole, de la contribution du conduit vocal du locuteur qui se traduit par l'enveloppe spectrale caractérisée par des fréquences particulières (formants).

Le principe d'utilisation de cette méthode est le suivant (voir fig 6 notamment):

la production d'un signal X de parole par un locuteur déterminé est modélisée schématiquement de la façon suivante : le signal X de parole résulte du filtrage par un filtre tout pôle H(z) du signal d'excitation E; H(z) peut être défini par :

$$H(z) * ( \Sigma j\, a(j) * z^j ) = 1 ,$$

où j varie de 1 à k;

dans ce schéma, H(z) représente la transformation du signal d'excitation sonore E produit par les cordes vocales, par les résonances du conduit vocal du locuteur, qui se traduisent sur le spectre du signal P de parole (fig-3) par des maxima centrés sur des fréquences f1,f2 dites de formants;

cette enveloppe spectrale (fig-5) qui est modélisée par les k coefficients a(j) a une forme identique ou très voisine de celle du spectre du signal P, à l'exception du "pic" centré sur la fréquence fondamentale f0 (ton) que l'on retrouve dans les signaux d'excitation E et Ei sous la forme de "pics" espacés d'un intervalle de temps t0=1/f0 (fig-4);

on suppose que le (n)ième échantillon x(n) du signal de parole est une combinaison linéaire de l'échantillon e(n) du signal d'excitation et de k échantillons précédents, ce qui peut s'écrire:

$$x(n) = e(n) - \Sigma j\, ( a(j) * x(n\text{-}j) )$$

où j varie de 1 à k;

les coefficients a(j) sont des coefficients de prédiction; si l'échantillon d'excitation e(n) est nul, on peut prédire, en appliquant la formule ci dessus, la valeur x(n) de l'échantillon du signal de parole, avec une erreur de prédiction dont la valeur err(n) sera :

$$err(n) = \Sigma_j\, ( a(j) * x(n\text{-}j) )$$

où j varie de 1 à k;

selon la méthode LPC, on détermine pour chaque échantillon x(n), les k valeurs de k coefficients a(1),...,a(k) qui permettent de minimiser l'erreur de prédiction, ce qui revient à minimiser l'erreur quadratique Q donnée par:

$Q = \Sigma_m\, ( err(m) )^2$ où m varie de 0 à (T-1), T étant le nombre d'échantillon de la fenêtre temporelle prise en considération;

ceci revient à annuler la dérivée partielle de l'erreur quadratique par rapport aux coefficients a(j).

Il résulte de ces calculs des valeurs e(1,..,n) représentatives d'un signal d'erreur assimilé au signal d'excitation, et une enveloppe spectrale de la fonction de transfert correspondant au conduit vocal;

On a constaté que, de façon surprenante, une transformation linéaire de l'enveloppe spectrale (c'est à dire des formants f1,f2 - fig 3 -) donnait une simulation satisfaisante des transformations dues aux conditions de locution; on interpole le signal d'excitation E d'un rapport de préférence égal à 2 ou 3.

On synthétise un signal de sortie (déformé par cette simulation) à partir du signal d'excitation interpolé Ei et des coefficients a(j) par la formule :

$$s(n) = \Sigma_j\, ( a(j) * s(n\text{-}j) ) + ei(n).$$

Cette superposition provoque le "décalage" linéaire en fréquence, dans le spectre du signal simulé obtenu, des "pics" correspondant aux fréquences de formants, selon un rapport égal au rapport d'interpolation utilisé, qui est de préférence égal à 2 ou 3.

Les dispositifs de simulation et de reconnaissance peuvent être par exemple réalisés en utilisant un PC (micro-ordinateur) équipé d'une carte mère à base d'un microprocesseur 80386 (fabriqué par la société INTEL) cadencé à 33 MHz et d'un coprocesseur mathématique 80387 (de la même société). Une carte de traitement de signal montée dans le micro-ordinateur PC s'occupe des traitements de simulation hyperbare et de la reconnaissance de parole.

Cette carte est essentiellement constituée d'un processeur TMS320C30 (fabriqué par la société Texas Instrument), d'une entrée analogique et de convertisseurs analogique / numérique et numérique / analogique avec une fréquence d'échantillonnage maximale de 200 KHz.

La simulation de parole hyperbare consiste à isoler des mots prononcés dans un milieu ambiant terrestre et à les transformer pour simuler ces mêmes mots prononcés dans un milieu hyperbare. Aucune contrainte de temps réel n'est requise pour ce type de traitement. Cependant, pour des raisons de temps de calcul, ce traitement est implanté sur la carte de traitement de signal.

Le système de reconnaissance exige une exécution en temps réel. De ce fait, il peut être implanté et optimisé sur la carte de traitement de signal.

## Revendications

1. Procédé de reconnaissance de signaux (A) de parole déformée délivrés par un microphone (15), dans lequel :

   - on numérise et on enregistre dans une mémoire (3) des signaux (P) de parole non déformée,
   - on élabore des signaux (D) déformés simulés à partir desdits signaux (P) de parole non déformée, les fréquences de formants desdits signaux déformés simulés étant voisines du double ou du triple des fréquences de formants desdits signaux non déformés numérisés,
   - on compare, à l'aide d'un module (16) de comparaison, par exemple par des calculs de distances, lesdits signaux (A) déformés avec lesdits signaux (D) déformés simulés.

2. Procédé selon la revendication 1, dans lequel :

   - lesdits signaux (P) sont échantillonnés et numérisés à une première fréquence (fe), les valeurs ou données successives (y(1), ..., y(n)) obtenues étant enregistrées dans une mémoire (3),
   - et dans lequel lesdits signaux (D) sont obtenus par conversion numérique-analogique, et échantillonnage à une deuxième fréquence (fs) voisine du double ou du triple de ladite première fréquence, de données (s(1),... s(3n)) représentatives dudit signal (D).

3. Procédé selon l'une quelconque des revendications 1 ou 2, dans lequel

   - on calcule, à partir desdits signaux (P) de parole non déformée, par une méthode de codage par prédiction linéaire, des données (e(1),..., e(n)) représentatives d'un signal (e) d'excitation non interpolé ainsi que des coefficients (a(1),..., a(k)) caractéristiques de l'enveloppe spectrale,
   - on obtient par interpolation desdites données (e(1),..., e(n)) représentatives d'un signal d'excitation non interpolé (e), des données (ei(1),..., ei(3n)) représentatives d'un signal (ei) d'excitation interpolé,
   - on obtient par synthèse ou superposition desdites données (ei(1),...,ei(3n)) ei(3n)) représentatives du signal d'excitation interpolé (ei) et d'une enveloppe spectrale déterminée par lesdits coefficients (a(1),..., a(k)), des données représentatives desdits signaux (D) déformés simulés.

4. Procédé selon l'une quelconque des revendications 1 ou 2, dans lequel lesdits signaux déformés simulés sont élaborés en utilisant une méthode de régression linéaire multiple appliquée aux vecteurs de cepstre desdits signaux de parole non déformée.

5. Dispositif de reconnaissance de signaux (A) de parole déformée délivrés par un microphone (15), comportant :

   - des moyens de numérisation et d'enregistrement dans une mémoire (3) de signaux (P) de parole non déformée,
   - des moyens d'élaboration de signaux (D) déformés simulés à partir desdits signaux (P) de parole non déformée, les fréquences de formants desdits signaux déformés simulés étant voisines du double ou du triple des fréquences de formants desdits signaux non déformés numérisés,
   - un module (16) de comparaison, par exemple par des calculs de distances, desdits signaux (A) déformés avec lesdits signaux (D) déformés simulés.

6. Dispositif selon la revendication 5, dans lequel les moyens d'élaboration de signaux (D) déformés simulés à partir des signaux (P) de parole non déformée comportent

   - des moyens (7) de calcul de données (e(1),..., e(n)) d'excitation et des moyens (8) de calcul de coefficients (a(1),..., a(k)) d'enveloppe spectrale, à partir de données (x(1),..., x(n)) représentatives des signaux (P) de parole non déformée,
   - des moyens (10) d'interpolation de données (ei(1),..., ei(3n)) d'excitation interpolées à partir des données (e(1),..., e(n)) d'excitation,
   - des moyens (11) de synthèse desdits signaux (D) déformés simulés à partir desdites données (ei(1),..., ei(3n)) d'excitation interpolées et desdits coefficients (a(1),..., a(k)) d'enveloppe.

7. Dispositif selon l'une quelconque des revendications 5 ou 6, qui comporte un module (9) de codage par prédiction linéaire.

8. Dispositif selon l'une quelconque des revendications 5 à 7, qui comporte une mémoire (13) d'enregistrement de données (s(1),..., s(3n)) représentatives des signaux (D) déformés simulés.

9. Dispositif selon l'une quelconque des revendications 5 à 8, qui comporte un convertisseur (12) numérique analogique pour la conversion de données (s(1),..., s(3n)) représentatives des signaux (D) déformés simulés en signaux analogiques.

## Patentansprüche

1. Verfahren zum Erkennen von Signalen (A) verzerrter Sprache, die über ein Mikrophon (15) abgegeben werden, in dem:

   - man Signale (P) nicht verzerrter Sprache digitalisiert und in einem Speicher (3) ablegt,
   - man verzerrte Signale (D) erzeugt, die ausgehend von diesen Signalen (P) nicht verzerrter Sprache simuliert sind, wobei die Bildungsfrequenzen der verzerrten simulierten Signale in der Nähe des Doppelten oder des Dreifachen der Bildungsfrequenzen dieser nicht verzerrten digitalisierten Signale liegen,
   - man mit Hilfe eines Vergleichsmoduls (16) beispielsweise durch Abstandsberechnungen diese verzerrten Signale (A) mit diesen simulierten verzerrten Signalen (D) vergleicht.

2. Verfahren nach Anspruch 1, in dem:

   - diese Signale (P) bei einer ersten Frequenz (fe) erfaßt und digitalisiert werden, wobei die erhaltenen nachfolgenden Werte oder Daten (y(1),..., y(n)) in einem Speicher (3) abgelegt werden,
   - und in dem diese Signale (D) durch Digital-Analog-Umsetzung und Datenerfassung bei einer zweiten Frequenz (fs) in der Nähe des Doppelten oder des Dreifachen dieser ersten Frequenz von für dieses Signal (D) repräsentativen Daten (s(1),.... s(3n)) erhalten werden.

3. Verfahren nach einem der Ansprüche 1 oder 2, in dem:

   - man ausgehend von diesen Signalen (P) nicht verzerrter Sprache mittels einer Kodierungsmethode durch lineare Vorhersage Daten (e(1),...,e(n)), die für ein nicht interpoliertes Anregungssignal (e) repräsentativ sind, wie auch charakteristische Koeffizienten (a(1),...,a(k)) der spektralen Umhüllung berechnet,
   - man durch Interpolation dieser für ein nicht interpoliertes Anregungssignal (e) repräsentativen Daten (e(1)...,e(n)) Daten (ei(1)...,ei(3n) erhält, die für ein interpoliertes Anregungssignal (ei) repräsentativ sind,
   - man durch Synthese oder Superposition dieser für das interpolierte Anregungssignal (ei) repräsentativen Daten (ei(1), ...,ei(3n)) und einer durch diese Koeffizienten, (a(1),..., a(k)) bestimmten spektralen Umhüllung Daten erhält, die für diese verzerrten simulierten Signale (D) repräsentativ sind.

4. Verfahren nach einem der Ansprüche 1 oder 2, in dem diese simulierten verzerrten Signale erzeugt werden, indem man ein Verfahren der multiplen linearen Regression verwendet, das auf die Spektralvektoren dieser Signale nicht verzerrter Sprache angewendet wird.

5. Vorrichtung zum Erkennen von Signalen (A) verzerrter Sprache, die durch ein Mikrophon (15) abgegeben werden, mit:

   - Mitteln zum Digitalisieren und Ablegen von Signalen (P) nicht verzerrter Sprache in einem Speicher (3),
   - Mitteln zum Erzeugen simulierter verzerrter Signale (D) ausgehend von diesen Signalen (P) nicht verzerrter Sprache, wobei die Bildungsfrequenzen der simulierten verzerrten Signale in der Nähe des Doppelten oder des Dreifachen der Bildungsfrequenzen der digitalisierten nicht verzerrten Signale liegen,
   - einem Modul (16) zum Vergleichen, beispielsweise durch Abstandsberechnungen, dieser verzerrten Signale (A) mit diesen simulierten verzerrten Signalen (D).

6. Vorrichtung nach Anspruch 5, in der die Mittel zum Erzeugen der simulierten verzerrten Signale (D) ausgehend von den Signalen (P) nicht verzerrter Sprache umfassen:

   - Mittel (7) zum Berechnen von Anregungsdaten (e(1),..., e(n)) und Mittel (A) zum Berechnen von Koeffizienten (a(1),..., a(k)) der spektralen Umhüllung, ausgehend von Daten (x(1),..., x(n)) die für die Signale (P) der nicht verzerrten Sprache repräsentativ sind,
   - Mittel (10) zur Interpolation interpolierter Anregungsdaten (ei(1)...,ei(3n)) ausgehend von Anregungsdaten (e(1),..., e(n)),
   - Mittel (11) zur Synthese dieser simulierten verzerrten Signale (D) ausgehend von diesen interpolierten Anregungsdaten (ei(1),...ei(3n)) und diesen Umhüllungskoeffizienten (a(1),..., a(k)).

7. Vorrichtung nach einem der Ansprüche 5 oder 6, die ein Modul (9) zur Kodierung mittels linearer Vorhersage umfaßt.

8. Vorrichtung nach einem der Ansprüche 5 bis 7, die einen Speicher (13) zum Ablegen von Daten (s(1),...,s(n)) umfaßt, die für die simulierten verzerrten Signale (D) repräsentativ sind.

**9.** Vorrichtung nach einem der Ansprüche 5 bis 8, die einen Digital-Analog-Umsetzer (12) umfaßt zum Umsetzen der für die simulierten verzerrten Signale (D) repräsentativen Daten (s(1), ...,s(3n)) in analoge Signale.

**Claims**

**1.** A method of recognizing deformed speech signals (A) delivered by microphone (15), in which:

- non-deformed speech signals (3) are digitized and stored in a memory (P) ;
- simulated deformed signals (D) are generated from said non-deformed speech signals (P), the frequencies of the formants of said simulated deformed signals being close to two or three times the frequencies of the formants of said digitized non-deformed signals; and
- a comparator module (16) is used to compare said deformed signals (A) with said simulated deformed signals (D), e.g. by computing distances.

**2.** A method according to claim 1, in which:

- said signals (P) are sampled and digitized at a first frequency (fe), the resulting successive data values (y(1), ..., y(n)) being stored in a memory (3); and in which
- said signals (D) are obtained by subjecting data (s(1), ... s(3)) representative of said signal (D) to analog-to-digital conversion and sampling at a second frequency (fs) close to two or three times said first frequency.

**3.** A method according to claim 1 or 2, in which:

- data (e(1), ..., e(n)) representative of a non-interpolated excitation signal (e) and coefficients (a(1), ..., a(k)) characteristic of the spectrum envelope are computed from said non-deformed speech signals (P) by a method of linear predictive coding;
- data (ei(1), ..., ei(3n) representative of an interpolated excitation signal (ei) is obtained by interpolating said data (e(1), ..., e(n)) representative of a non-interpolated excitation signal (e); and
- data representative of said simulated deformed signals (D) is obtained by synthesis or superposition of said data (ei(1), ..., ei(3n)) representative of the interpolated excitation signal (ei) and from a spectrum envelope determined by said coefficients (a(1), ..., a(k)).

**4.** A method according to claim 1 or 2, in which said simulated deformed signals are generated by using a multiple linear regression method applied to the cepstrum vectors of said non-deformed speech signals.

**5.** A system for recognizing deformed speech signals (A) delivered by a microphone (15), the system comprising:

- means for digitizing non-deformed speech signals (P) and for storing them in a memory (3);
- means for generating simulated deformed signals (D) from said non-deformed speech signals (P), the frequencies of the formants of said simulated deformed signals being close to two or three times the frequencies of the formants of said digitized non-deformed signals; and
- a comparator module (16), for comparing said deformed signals (A) with said simulated deformed signals (D), e.g. by computing distances.

**6.** A system according to claim 5, in which the means for generating simulated deformed signals (D) from non-deformed speech signals (P) comprise:

- means (7) for computing excitation data (e(1), ..., e(n)) and means (8) for computing spectrum envelope coefficients (a(1), ..., a(k)) from data (x(1), ..., x(n)) representative of the non-deformed speech signals (P);
- means (10) for interpolating interpolated excitation data (ei(1), ..., ei(3n)) from the excitation data (e(1), ..., e(n)); and
- means (11) for synthesizing said simulated deformed signals (D) from said interpolated excitation data (ei(1), ..., ei(3n)) and from said envelope coefficients (a(1), ..., a(k)).

**7.** A system according to claim 5 or 6, including a module (9) for linear predictive coding.

**8.** A system according to any one of claims 5 to 7, including a memory (13) for storing data (s(1), ..., s(3n)) representative of the simulated deformed signals (D).

**9.** A system according to any one of claims 5 to 8, including a digital-to-analog converter (12) for converting data (s(1), ..., s(3n)) representative of the simulated deformed signals (D) into analog signals.

# FIG.1

EP 0 665 531 B1

FIG.3

FIG.5

FIG.6

FIG.2

FIG.4

10